# EUROPÄISCHE PATENTSCHRIFT

(11) **EP 0 357 586 B1**
(45) Veröffentlichungstag und Bekanntmachung des Hinweises auf die Patenterteilung: **14.09.1994**
(21) Anmeldenummer: 89890204.4
(22) Anmeldetag: 31.07.1989
(51) Int. Cl.: G01N 21/64

(54) **Verfahren zur quantitativen Bestimmung zumindest eines Parameters einer flüssigen oder gasförmigen Probe**
Process for the quantitative determination of at least one parameter of a liquid or gaseous sample
Procédé pour la détermination quantitative d'au moins un paramètre d'un échantillon liquide ou gazéiforme

(30) Priorität: 02.08.1988 AT 1952/88
(43) Veröffentlichungstag der Anmeldung: 07.03.1990
(73) Patentinhaber: AVL Medical Instruments AG, 8207 Schaffhausen (CH)
(72) Erfinder: Wolfbeis, Otto S., Dr., A-8046 Graz (AT)
(74) Vertreter: Krause, Walter, Dr. Dipl.-Ing.

(56) Entgegenhaltungen:
- EP-A- 0 175 352
- AT-B- 377 364
- AT-B- 379 687
- AT-B- 379 688
- AT-B- 386 078
- DE-A- 2 508 637

## Beschreibung

Die Erfindung betrifft ein Verfahren zur quantitativen Bestimmung zumindest eines Parameters einer flüssigen oder gasförmigen Probe, wobei die nach Fluoreszenzanregung emittierte Fluoreszenzstrahlung einer mit der Probe in Direkt- oder Diffusionskontakt stehenden Indikatorsubstanz gemessen und der Meßwert mit Kalibrierdaten verglichen wird.

In bekannten Meßvorrichtungen mit optisch aktiven Indikatorsubstanzen bzw. Fluoreszenzfarbstoffen, wird die mit einer Änderung des zu messenden Parameters bzw. der zu bestimmenden Stoffkonzentration erfolgende Änderung des Anregungs- bzw. Emissionsspektrums registriert, wobei über geeignete Kalibrierverfahren und Kalibriersubstanzen die gewünschten Parameter bzw. Stoffkonzentrationen bestimmt werden können. Die Begriffe "Anregungsspektrum" und "Emissionsspektrum" sollen hier und im folgenden derart definiert sein: Zur Gewinnung des Anregungsspektrums wird die Wellenlänge der Anregungsstrahlung über deren Spektrum variiert und die Intensität der Emissionsstrahlung bei einer bestimmten Wellenlänge gemessen. Zur Gewinnung des Emissionsspektrums wird die Wellenlänge der Anregungsstrahlung konstant gehalten und die spektrale Intensitätsverteilung der Emissionsstrahlung gemessen. Die Monochromatisierung der Anregungsstrahlung erfolgt dabei in bekannter Weise durch geeignete Einrichtungen, wie selektive Filter, oder Prismen mit nachgeschalteter Spaltblende oder mit Hilfe von elektronisch durchstimmbaren Anregungslichtquellen. Die Emissionsstrahlung wird, ebenfalls wellenlängenabhängig, von einer geeigneten Meßeinrichtung registriert.

So ist beispielsweise aus der DE-OS 2 508 637 eine Meßvorrichtung bekannt, welche einen probenseitig mit einer selektiv durchlässigen Membran abgedeckten Indikatorraum aufweist, in welchem sich die organische Indikatorsubstanz befindet. Als Indikatoren werden bei dieser bekannten Vorrichtung bestimmte organische Verbindungen, wie z.B. β-Methylumbelliferon verwendet, welche in Abhängigkeit von der Konzentration an positiven Wasserstoffionen in der den Indikator enthaltenden Lösung mit einer Änderung ihres Anregungsspektrums reagieren. Bei Ermöglichen der selektiven Diffusion von Wasserstoffionen aus der zu vermessenden Probe in den Indikatorraum bzw. die Indikatorlösung kann also die Wasserstoffionenkonzentration bzw. der pH-Wert der Probe gemessen werden.

Es ist aus dieser Druckschrift auch bekannt, daß die Intensität des Emissionsspektrums von bestimmten organischen Verbindungen, wie beispielsweise der Pyrenbuttersäure durch Anwesenheit von molekularem Sauerstoff in einem Maß verringert wird, welches dem Sauerstoffpartialdruck der den Indikator enthaltenden Phase in weiten Grenzen verhältnisgleich ist, womit eine derartige Einrichtung auch zur Messung des Sauerstoffpartialdruckes verwendbar ist.

Diese bekannte Anordnung hat jedoch den Nachteil, daß die gleichzeitige Messung der Konzentration von mehreren verschiedenen Stoffen in der Probe relativ aufwendig ist. Es sind dazu z.B. mehrere nebeneinanderliegende Indikatorräume notwendig, welche je eine auf den zu messenden Stoff ansprechende Indikatorsubstanz enthalten müssen, die über jeweils zugeordnete Monochromatoren angeregt werden und deren Fluoreszenzstrahlung von entsprechenden eigenen Meßeinrichtungen ausgewertet wird.

Weiters ist es aus der AT-PS 377 364 bekannt, eine substituierte aromatische bzw. heteroaromatische Verbindung als organische Indikatorsubstanz zu verwenden, wobei die substituierte aromatische bzw. heteroaromatische Verbindung einen oder mehrere Substituenten enthält. Derartige Indikatoren bzw. Indikatorsubstanzen, welche durch Farbverschiebung im Anregungsspektrum sowie Intensitätsänderung im Emissionsspektrum in deutlich unterscheidbarer Weise auf die Änderung der Konzentration von zumindest zwei verschiedenen Stoffen in der Probe reagieren, wobei die Farbverschiebung sowie die Intensitätsänderung als Maß für die jeweilige Konzentrationsänderung der nachzuweisenden Stoffe dient, weisen als funktionelle Gruppen insbesondere mindestens eine Phenol-, Carbonsäure-, oder Sulfonsäuregruppe, etc. oder eine Kombination dieser Gruppen auf. Es werden hier also organische Indikatorsubstanzen verwendet, welche durch Farbverschiebung und Intensitätsänderung der nach Anregung ausgesandten Fluoreszenzstrahlung auf Konzentrationsänderungen der zu messenden Stoffe in der Probe reagieren.

Es kann beispielsweise eine Indikatorsubstanz verwendet werden, welche bei Änderung der Wasserstoffionenkonzentration in der Probe mit einer Farbverschiebung ihres Anregungsspektrums und bei Änderung der Konzentration von molekularem Sauerstoff in der Probe mit einer Intensitätsänderung ihres Emissionsspektrums reagiert, wobei die isosbestische Wellenlänge zumindest annähernd konstant bleibt. Die Intensität des Fluoreszenzlichtes bei Anregung mit der isosbestischen Wellenlänge ist definitionsgemäß eine pH-unabhängige Größe und stellt ein Maß für die gesamte Konzentration der im Indikatorraum enthaltenen Indikatorsubstanz dar.

Gewisse Nachteile treten dadurch auf, daß zumindest ein gesuchter Parameter (hier O₂) ausschließlich von einer Intensitätsänderung der Fluoreszenzstrahlung abhängt und damit von Alterungsprozessen (Photobleiche) der Indikatorsubstanz abhängig ist. Zusätzlich beeinflussen diesen Meßwert auch Intensitätsschwankungen der Anregungslichtquelle sowie die sich ändernde Ansprechempfindlichkeit der die Fluoreszenzstrahlung detektierenden Meßanordnung.

Da die eindeutige Trennung der Abschwächung sowie der Farbverschiebung der Fluoreszenzstrahlung und die jeweilige Zuordnung zu einer Änderung der Wasserstoffionenkonzentration bzw. Änderung der Konzentration von molekularem Sauerstoff in der Probe nur dann auf einfache Weise möglich ist, wenn die isosbestische Wellenlänge bei unterschiedlicher O₂-Konzentration zumindest annähernd konstant bleibt, ist ein Auswahlkriterium gegeben, welches nur von wenigen Indikatorsubstanzen erfüllt wird.

Aufgabe der vorliegenden Erfindung ist es, die Nachteile der für die eingangs genannten Vorrichtungen bzw. Verfahren verwendeten Indikatorsubstanzen zu vermeiden und damit die Simultanmessung von zwei Parametern einer Probe auf einfache Weise zu verbessern, wobei die Meßwerte von Alterungsprozessen der Indikatorsubstanz, Schwankungen der Lichtstärke der Anregungslichtquelle sowie unterschiedliche Detektoreffizienz nicht beeinflußt werden sollen.

Diese Aufgabe wird gemäß der vorliegenden Erfindung dadurch gelöst, daß die Änderung eines ersten zu messenden Parameters aus der Änderung des Verhältnisses zweier, bei unterschiedlichen Wellenlängen des Anregungs- oder Emissionsspektrums der Indikatorsubstanz bestimmter Intensitätswerte und die Änderung eines zweiten Parameters aus der Änderung der Abklingzeit t der Fluoreszenzstrahlung derselben Indikatorsubstanz aus der Gruppe der aromatischen Kohlenwasserstoffe, der aromatischen Heterocyclen und der metallorganischen Komplexe gewonnen wird.

Vorteilhafterweise ist sowohl die Messung der Abklingzeit der Fluoreszenzstrahlung als auch die Änderung des Verhältnisses zweier Intensitätswerte des Anregungs- bzw. Emissionsspektrums von Alterungsprozessen der Indikatorsubstanz sowie von den oben genannten nachteiligen Einflüssen der Meßvorrichtung unabhängig, sodaß auf einfache Weise mit einer Indikatorsubstanz zwei Parameter der Probe bestimmt werden können.

So kann beispielsweise erfindungsgemäß vorgesehen sein, daß als Indikatorsubstanz ein Sulfonsäureanilid oder ein Hydroxylderivat eines polycyclischen aromatischen Kohlenwasserstoffes oder einer heterocyclischen Verbindung verwendet wird, wobei der pH-Wert mit dem Intensitätsverhältnis und die O₂-Konzentration der Probe mit der Fluoreszenz-Abklingzeit t erfaßt wird. Beispielsweise kann ein Phenol aus der Gruppe der Hydroxyanthracene, Hydroxynaphthaline und Hydroxypyrene herangezogen werden. Als Anwendungsgebiet wäre hier die Blutgasanalyse zu nennen, wo neben dem O₂-Gehält auch immer die genaue Bestimmung des pH-Wertes des Blutes notwendig ist. Ein weiteres Anwendungsgebiet ist in der Bioprozeßtechnik gegeben, speziell bei den Fermentersonden von Bioreaktoren.

Weiters kann als Indikatorsubstanz nach einem anderen Merkmal der Erfindung als Indikatorsubstanz Eosin oder ein 7-Hydroxycumarin verwendet werden, wobei der pH-Wert mit dem Intensitätsverhältnis und die Temperatur der Probe mit der Fluoreszenz-Abklingzeit t erfaßt wird. Als Anwendungsbeispiel sei auch hier wieder auf die Blutgasanalyse verwiesen, wo für eine genaue Bestimmung des pH-Wertes eine Temperaturmessung erforderlich ist. Aufwendige Thermostatisierungen der Meßvorrichtung können dadurch entfallen. Zudem sind die hier genannten Indikatorsubstanzen weitgehend unabhängig vom O₂-Gehalt der Probe. Weitere vorteilhafte Anwendungen sind dort möglich, wo unter nicht thermostatisierten Bedingungen gemessen werden soll. Da fast alle Sensoren temperaturabhängig sind, bietet sich mit der erfindungsgemäßen Methode erstmalig die Möglichkeit, ohne zusätzliches Temperatursensorelement temperaturkorrigiert messen zu können.

Bei Blutgasanlysen können auch beispielsweise mit zwei Indikatorschichten, wovon eine beispielsweise ein Hydroxyanthracen und die andere Eosin enthält, O₂-Konzentration, Temperatur und pH-Wert bestimmt werden, wobei der Meßwert für letztere Größe von jeder der beiden Indikatorsubstanzen anfällt und einer der Werte als Prüfgröße für alle anderen verwendet werden kann. Messungen können dadurch rasch und zuverlässig durchgeführt werden.

Eine andere Ausgestaltung der Erfindung sieht vor, daß als Indikatorsubstanz eine Lösung von 1-Hydroxypyren-3,6,8-trisulfonat in einem Bicarbonatpuffer verwendet wird, welche in ein Silikonpolymer eingebettet ist, wobei die CO₂-Konzentration der Probe der mit Intensitätsverhältnis und die Temperatur der Probe mit der Fluoreszenz-Abklingzeit t erfaßt wird. Die durch CO₂ bewirkte Änderung des pH-Wertes bewirkt dabei eine Änderung der Fluoreszenz des Indikators. Aus den Verhältnissen zweier Intensitätswerte des Emissionsspektrums, gemessen bei 520 nm bei der Anregungswellenlänge von 460 bzw. 410 nm, wird der CO₂-Partialdruck ermittelt. Gleichzeitig wird durch Messung der Fluoreszenzabklingzeit bei der Anregungswellenlänge von 460 nm und Fluoreszenzmessung bei 520 nm die Temperatur bestimmt.

Es ist erfindungsgemäß auch vorgesehen, daß als Indikatorsubstanz 7-Hydroxy-N-methylchinolinium verwendet wird, wobei der pH-Wert mit dem Intensitätsverhältnis und die Chloridkonzentration der Probe mit der Änderung der Fluoreszenz-Abklingzeit t erfaßt wird.

Das Meßverfahren nach der Erfindung sieht weiters vor, daß die mit der Probe in Kontakt stehende Indikatorsubstanz mit einer bekannten bzw. vorab ermittelten Fluoreszenz-Abklingzeit tₒ mit moduliertem Licht angeregt und aus der Phasenverschiebung zwischen Anregungsstrahlung und Fluoreszenzstrahlung die Fluoreszenz-Abklingzeit t ermittelt wird, daß aus dem Verhältnis von t : tₒ der Wert des zweiten Parameters bestimmt wird, sowie daß aus dem Verhältnis zweier Intensitätswerte des Emissionsspektrums, gemessen bei unterschiedlichen Wellenlängen, der Wert des ersten Parameters bestimmt wird. Die Änderung der Abklingzeit und somit z.B. der O₂-Gehalt einer Probe wird dabei phasenfluorimetrisch, die Änderung des pH-Wertes über das Intensitätsverhältnis bestimmt.

Es ist in einer anderen Ausführung der Erfindung auch möglich, daß die mit der Probe in Kontakt stehende Indikatorsubstanz mit einer bekannte, bzw. vorab ermittelten ungelöschten Fluoreszenz-Abklingzeit tₒ mit einem Lichtpuls angeregt wird, daß innerhalb der Abklingperiode zumindest zwei Intensitätswerte gewonnen werden und daraus die Fluoreszenz-Abklingzeit t bestimmt wird. Beide Methoden, sowohl die phasenfluorimetrische als auch die Pulsmethode, sind bereits in einem anderen Zusammenhang in der AT-PS (186/86) des Erfinders beschrieben. Hier kann jedoch mit einer Indikatorsubstanz - beispielsweise zur Messung von Sauerstoff ein metallorganischer Komplex der Elemente Ruthenium oder Iridium - nur eine Substanz bestimmt werden.

Schließlich ist es erfindungsgemäß auch möglich, daß zur Bestimmung der Änderung der spektralen Intensitätsverteilung der Fluoreszenzstrahlung die Verschiebung des Fluoreszenzmaximums erfaßt wird.

Die Erfindung wird im folgenden anhand der Zeichnungen näher erläutert. Es zeigen:
- Fig. 1: Emissionsspektren einer Indikatorsubstanz gemäß der Erfindung und
- Fig. 2: die schematische Darstellung einer entsprechenden Meßvorrichtung.

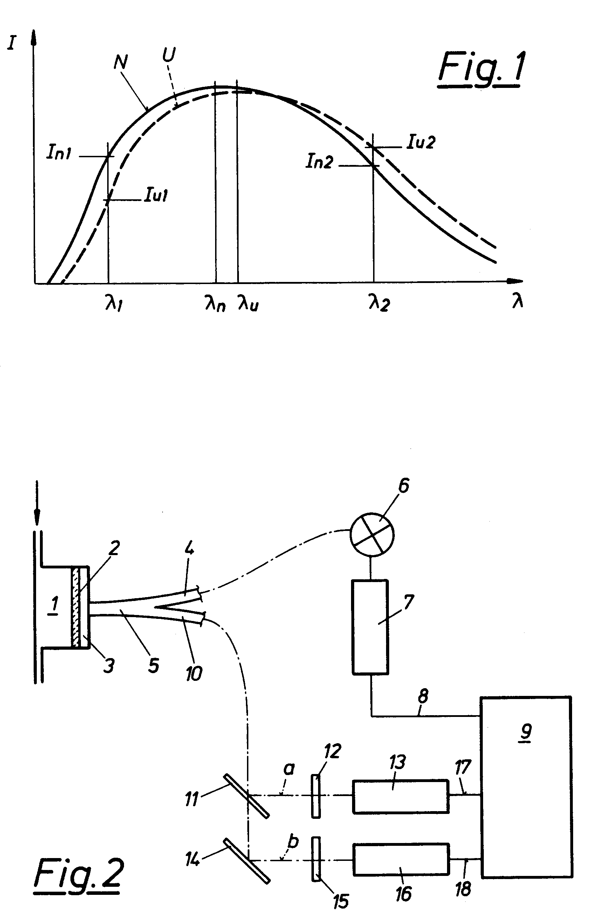

In dem in Fig. 1 dargestellten Diagramm ist auf der Ordinate die Intensität I der Fluoreszenzstrahlung und auf der Abszisse die Wellenlänge Lambda aufgetragen. Mit der voll ausgezogenen Linie N ist das Emissionsspektrum einer Indikatorsubstanz nach der Erfindung, beispielsweise Eosin, für eine neutrale Lösung mit pH=7 dargestellt, mit der strichlierten Linie U jenes einer unbekannten Probe deren pH-Wert bestimmt werden soll. Aus dem bekannten bzw. einmal zu bestimmenden Intensitätsverhältnis Iₙ₁/Iₙ₂ bei den Wellenlängen Lambda₁ bzw. Lambda₂ einer neutralen Probe, kann nach Bestimmung des Intensitätsverhältnisses Iᵤ₁/Iᵤ₂ einer zu messenden unbekannten Probe mit Hilfe einer Kalibrierfunktion, welche einen Zusammenhang zwischen pH-Wert und Intensitätsverhältnis herstellt, der pH-Wert der unbekannten Probe bestimmt werden. Im dargestellten Beispiel ist die unbekannte Probe basisch.

Da das Intensitätsverhältnis von Alterungsprozessen der Indikatorsubstanz sowie von Schwankungen der Detektorempfindlichkeit bzw. der Anregungslichtstärke unabhängig ist, kann der pH-Wert unabhängig von diesen Störgrößen bestimmt werden. Unabhängig von Intensitätsmessungen wird dann der zweite Parameter, beispielsweise die Temperatur phasenfluorimetrisch gemessen.

Es ist natürlich auch möglich, die Änderung des pH-Wertes über die Verschiebung des Maximums der Fluoreszenzstrahlung von Lambdaₙ auf Lambdaᵤ zu bestimmen.

Eine mögliche Ausführungsform einer Meßvorrichtung nach der Erfindung ist in Fig. 2 dargestellt. Die in einer Meßkammer 1 vorliegende flüssige oder gasförmige Probe gelangt über eine Membran 2 mit der in geeigneter Weise in der Meßkammer immobilisierten Indikatorsubstanz 3 in Kontakt, wobei die zu bestimmenden Parameter deren Fluoreszenzverhalten ändern. Über einen Arm 4 eines zweiarmigen Lichtleiters 5 wird der Indikatorsubstanz 3 mittels einer Lichtquelle 6 modulierte Anregungsstrahlung zugeführt, wobei die Energieversorgung 7 der Lichtquelle 6 über eine Steuerleitung 8 mit einer Steuer- und Auswerteeinheit 9 verbunden ist. Der zweite Arm 10 des zweiarmigen Lichtleiters 5 führt zu einem Strahlteiler 11, wo ein erster Teilstrahl a einer aus einem Filter 12 und einem Detektor 13 bestehenden Einheit zugeführt wird. Der zweite Teilstrahl b wird über einen Spiegel 14 einer zweiten Einheit, bestehend aus Filter 15 und Detektor 16, zugeführt. Die beiden Filter lassen jeweils nur Strahlung der Wellenlänge Lambda₁ bzw. Lambda₂ passieren. In der mit den Detektoren 13, 16 über Signalleitungen 17, 18 verbundenen Auswerteeinheit 9 werden die Verhältnisse der Signalhöhen aus den beiden Leitungen 17 und 18 gebildet und aus einer abgespeicherten Kalibrierfunktion der pH-Wert berechnet. Die zweite zu bestimmende Größe wird aus dem Winkel der Phasenverschiebung zwischen Anregungsstrahlung und einem der Teilstrahlen a oder b bestimmt.

Es ist natürlich auch möglich, nur einen Detektor zu verwenden, welchem ein Chopper-Rad mit zwei unterschiedlich durchlässigen Filtern vorgeschaltet ist, wodurch Spiegel und Strahlteiler im Strahlengang entfallen und Fehler aus unterschiedlichen Ansprechfunktionen der beiden Detektoren vermeidbar sind.

## Patentansprüche

1. Verfahren zur quantitativen Bestimmung zumindest eines Parameters einer flüssigen oder gasförmigen Probe, wobei die nach Fluoreszenzanregung emittierte Fluoreszenzstrahlung einer mit der Probe in Direkt- oder Diffusionskontakt stehenden Indikatorsubstanz gemessen und der Meßwert mit Kalibrierdaten verglichen wird, **dadurch gekennzeichnet,** daß die Änderung eines ersten zu messenden Parameters aus der Änderung des Verhältnisses zweier, bei unterschiedlichen Wellenlängen des Anregungs- oder Emissionsspektrums der Indikatorsubstanz bestimmter Intensitätswerte und die Änderung eines zweiten Parameters aus der Änderung der Abklingzeit t der Fluoreszenzstrahlung derselben Indikatorsubstanz aus der Gruppe der aromatischen Kohlenwasserstoffe, der aromatischen Heterocyclen und der metallorganischen Komplexe gewonnen wird.

2. Verfahren nach Anspruch 1, **dadurch gekennzeichnet,** daß als Indikatorsubstanz ein Sulfonsäureanilid oder ein Hydroxylderivat eines polycyclischen aromatischen Kohlenwasserstoffes oder einer heterocyclischen Verbindung verwendet wird, wobei der pH-Wert mit dem Intensitätsverhältnis und die O₂-Konzentration der Probe mit der Fluoreszenz-Abklingzeit t erfaßt wird.

3. Verfahren nach Anspruch 1, **dadurch gekennzeichnet,** daß als Indikatorsubstanz Eosin oder ein 7-Hydroxycumarin verwendet wird, wobei der pH-Wert mit dem Intensitätsverhältnis und die Temperatur der Probe mit der Fluoreszenz-Abklingzeit t erfaßt wird.

4. Verfahren nach Anspruch 1, **dadurch gekennzeichnet,** daß als Indikatorsubstanz eine Lösung von 1-Hydroxypyren-3,6,8-trisulfonat in einem Bicarbonatpuffer verwendet wird, welche in ein Silikonpolymer eingebettet ist, wobei die CO₂-Konzentration der Probe mit dem Intensitätsverhältnis und die Temperatur der Probe mit der Fluoreszenz-Abklingzeit t erfaßt wird.

5. Verfahren nach Anspruch 1,**dadurch gekennzeichnet,** daß als Indikatorsubstanz 7-Hydroxy-N-methylchinolinium verwendet wird, wobei der pH-Wert mit dem Intensitätsverhältnis und die Chloridkonzentration der Probe mit der Anderung der Fluoreszenz-Abklingzeit t erfaßt wird.

6. Verfahren nach einem der Ansprüche 1 bis 5, **dadurch gekennzeichnet,** daß die mit der Probe in Kontakt stehende Indikatorsubstanz mit einer bekannten bzw. vorab ermittelten Fluoreszenz-Abklingzeit tₒ mit moduliertem Licht angeregt und aus der Phasenverschiebung zwischen Anregungsstrahlung und Fluoreszenzstrahlung die Fluoreszenz-Abklingzeit t ermittelt wird, daß aus dem Verhältnis von t : tₒ der Wert des zweiten Parameters bestimmt wird, sowie daß aus dem Verhältnis zweier Intensitätswerte des Emissionsspektrums, gemessen bei unterschiedlichen Wellenlängen, der Wert des ersten Parameters bestimmt wird.

7. Verfahren nach einem der Ansprüche 1 bis 5, **dadurch gekennzeichnet,** daß die mit der Probe in Kontakt stehende Indikatorsubstanz mit einer bekannten bzw. vorab ermittelten ungelöschten Fluoreszenz-Abklingzeit tₒ mit einem Lichtpuls angeregt wird, daß innerhalb der Abklingperiode zumindest zwei Intensitätswerte gewonnen werden und daraus die Fluoreszenz-Abklingzeit t bestimmt wird.

8. Verfahren nach Anspruch 6 oder 7, **dadurch gekennzeichnet,** daß zur Bestimmung der Änderung der spektralen Intensitätsverteilung der Fluoreszenzstrahlung die Verschiebung des Fluoreszenzmaximums erfaßt wird.

## Claims

1. A process for the quantitative determination of at least one parameter of a liquid or gaseous sample, in which process the fluorescence radiation emitted upon excitation of an indicator substance in direct or diffusion contact with the sample is measured and the measured value is compared with calibration data, **characterized in that** the change in a first parameter to be measured is obtained from the change in the ratio of two intensity values determined for different wavelengths of the excitation or emission spectrum of the indicator substance, and the change in a second parameter is obtained from the change in decay time t of the fluorescence radiation of the same indicator substance from the group of aromatic hydrocarbons, aromatic heterocycles, and metal organic complexes.

2. A process as claimed in claim 1, **characterized in that** a sulfonic acid anilide or a hydroxyl derivative of a polycyclic aromatic hydrocarbon or a heterocyclic compound is used as indicator substance, the pH value being obtained via the intensity ratio, and the O₂ concentration of the sample via the fluorescence decay time t.

3. A process as claimed in claim 1, **characterized in that** eosin or a 7-hydroxycoumarin is used as indicator substance, the pH value being obtained via the intensity ratio, and the temperature of the sample via the fluorescence decay time t.

4. A process as claimed in claim 1, **characterized in that** a solution of 1-hydroxypyrene-3,6,8-trisulfonate in a bicarbonate buffer is used as indicator substance, which is embedded in a silicone polymer, the CO₂ concentration of the sample being obtained via the intensity ratio, and the sample temperature via the fluorescence decay time t.

5. A process as claimed in claim 1, **characterized in that** 7-hydroxy-N-methylquinolinium is used as indicator substance, the pH value being obtained via the intensity ratio, and the chloride concentration of the sample via the change in fluorescence decay time t.

6. A process as claimed in any of claims 1 to 5, **characterized in that** the indicator substance, which is in contact with the sample and has a known or previously determined fluorescence decay time tₒ, is excited with modulated light, and that the fluorescence decay time t is determined from the phase shift between excitation radiation and fluorescence radiation, and that the value of the second parameter is determined from the ratio of t:tₒ, and that the value of the first parameter is determined from the ratio of two intensity values of the emission spectrum measured at different wavelengths.

7. A process as claimed in any of claims 1 to 5, **characterized in that** the indicator substance, which is in contact with the sample and has a known or previously determined unquenched fluorescence decay time tₒ, is excited with a light pulse, and that at least two intensity values are obtained within the decay period and the fluorescence decay time t is determined therefrom.

8. A process as claimed in claim 6 or 7, **characterized in that** the shift of the fluorescence maximum is detected to determine the change in spectral intensity distribution of the fluorescence radiation.

## Revendications

1. Procédé de détermination quantitative d'au moins un paramètre d'un échantillon liquide ou gazeux, selon lequel le rayonnement fluorescent émis après l'excitation de la fluorescence d'une substance indicatrice se trouvant en contact direct ou par diffusion avec l'échantillon, est mesuré et la valeur mesurée est compararée à des données d'étalonnage, caractérisé en ce que la modification d'un premier paramètre à mesurer est obtenue d'après la modification du rapport de deux valeurs d'intensité déterminées pour des longueurs d'ondes différentes du spectre d'excitation ou d'émission de la substance indicatrice, et en ce que la modification d'un deuxième paramètre est obtenue d'après la modification du temps d'évanouissement t de la même substance indicatrice issue du groupe des hydrocarbures aromatiques, des hétérocycles aromatiques et des complexes métallo-organiques.

2. Procédé selon la revendication 1, caractérisé en ce qu'on utilise comme substance indicatrice un anilide d'acide sulfonique ou un dérivé d'hydroxyle d'un hydrocarbure aromatique polycyclique ou d'un composé hétérocyclique, dont la valeur pH est détectée avec le rapport d'intensité et la concentration d'O₂ de l'échantillon avec le temps d'évanouissement de la fluorescence t.

3. Procédé selon la revendication 1, caractérisé en ce qu'on utilise comme substance indicatrice de l'éosine ou une 7-hydroxycoumarine, la valeur pH est détectée avec le rapport d'intensité et la température de l'échantillon avec le temps d'évanouissement de la fluorescence t.

4. Procédé selon la revendication 1, caractérisé en ce qu'on utilise comme substance indicatrice une solution de 3,6,8-trisulfonate de 1-hydroxypyrène tamponnée avec du bicarbonate, qui est enrobée dans un polymère de silicone, et en ce que la concentration de CO₂ de l'échantillon est détectée avec le rapport d'intensité et la température de l'échantillon avec le temps d'évanouissement de la fluorescence t.

5. Procédé selon la revendication 1, caractérisé en ce qu'on utilise comme substance indicatrice du 7-hydroxy-N-méthylquinolinium, la valeur pH est détectée avec le rapport d'intensité et la concentration de chlorure de l'échantillon avec la modification du temps d'évanouissement de la fluorescence t.

6. Procédé selon l'une des revendications 1 à 5, caractérisé en ce que la substance indicatrice se trouvant en contact avec l'échantillon est excitée avec une lumière modulée connue ou avec un temps d'évanouissement de la fluorescence tₒ préalablement déterminé et en ce que le temps d'évanouissement de la fluorescence t est établi d'après le déphasage entre le rayonnement d'excitation et le rayonnement de fluorescence, en ce que la valeur du deuxième paramètre est déterminée d'après le rapport t : tₒ et en ce que la valeur du premier paramètre est déterminée d'après le rapport des deux valeurs d'intensité du spectre d'émission, mesuré avec des longueurs d'ondes différentes.

7. Procédé selon l'une des revendications 1 à 5, caractérisé en ce que la substance indicatrice se trouvant en contact avec l'échantillon, dont le temps d'évanouissement de la fluorescence non effacé est connu ou déterminé d'avance, est excitée au moyen d'une impulsion lumineuse et en ce que sont obtenues au cours de la période d'évanouissement au moins deux valeurs d'intensité, d'après lesquelles est déterminé le temps d'évanouissement de la fluorescence t.

8. Procédé selon la revendication 6 ou 7, caractérisé en ce que le déplacement du maximum de fluorescence est relevé pour déterminer la modification de répartition d'intensité spectrale du rayonnement de fluorescence.
